# EUROPÄISCHE PATENTANMELDUNG

(11) **EP 0 597 368 A1**
(43) Veröffentlichungstag der Anmeldung: **18.05.1994**
(21) Anmeldenummer: 93117769.5
(22) Anmeldetag: 03.11.1993
(51) Int. Cl.: H01M 8/02, C04B 35/44

(54) **Verfahren zur Herstellung einer Lithiumaluminat-Matrixschicht für eine Schmelzcarbonat-Brennstoffzelle**

(30) Priorität: 13.11.1992 DE 4238292
(71) Anmelder: MTU MOTOREN- UND TURBINEN-UNION FRIEDRICHSHAFEN GMBH, D-88040 Friedrichshafen (DE)
(72) Erfinder: Hofmann, Hans, Dr., D-63165 Mühlheim (DE)

(57) **Zusammenfassung**

Die gamma-Lithiumaluminat-Matrixschicht für eine Schmelzcarbonat-Brennstoffzelle wird mit einem Schlicker hergestellt, dessen flüssige Phase durch eine wäßrige Polyvinylalkohol-Lösung gebildet wird.

## Beschreibung

Die Erfindung bezieht sich auf ein Verfahren zur Herstellung einer Lithiumaluminat-Matrixschicht für eine Schmelzcarbonat-Brennstoffzelle nach dem Oberbegriff des Anspruchs 1.

Eine Schmelzcarbonat-Brennstoffzelle (MCFC) besteht aus einem Stapel bipolarer Platten, welche jeweils aus einer Matrixschicht bestehen, die auf der einen Seite mit einer Anodenschicht und auf der anderen Seite mit einer Kathodenschicht versehen ist. Die Anodenschicht kann eine poröse Nikkelschicht sein, und die Kathodenschicht eine poröse Nickeloxidschicht. Die Matrixschicht bildet ein Diaphragma zwischen den beiden Elektrodenschichten und besteht z.B. aus gamma-Lithiumaluminat. Sie enthält den Elektrolyten, der meistens durch ein Gemisch aus Lithiumcarbonat und Natriumcarbonat gebildet wird. Die Betriebstemperatur einer solchen Brennstoffzelle liegt im allgemeinen zwischen 600 und 700 _{°} C.

Zur Herstellung der Matrixschicht aus gamma-Lithiumaluminat wird nach dem Stand der Technik ein Schlicker verwendet, dessen flüssige Phase aus organischen Lösungsmitteln besteht, beispielsweise ein Gemisch aus Cyclohexan, Ethylmethylketon und Fischöl.

Nach DE 32 35 240 C2 und DE 32 35 241 C2 werden Matrix-Schichten für Schmelzcarbonat-Brennstoffzellen aus gamma-Lithiumaluminat, Aluminiumoxid als Rißstopper und Polyvinylbutyral hergestellt. Diese Komponenten werden mit einem organischen Lösungsmittel, bevorzugt mit Perchlorethylen und Isobutanol, und Rohfischöl versetzt, um eine Aufschlämmung zu bilden, die zu einer Naßfolie ausgezogen und dann getrocknet wird.

Aus DE 40 30 945 A1 ist es bekannt, zur Bildung der Matrix-Schicht einer Schmelzcarbonat-Zelle eine Masse aus Aluminiumoxid und Zirkonoxid mit Polyvinylalkohol und Wasser zu einer Folie auszuwalzen, die nach dem Trocknen mit der Lithiumcarbonat-haltigen Schmelze in Kontakt gebracht wird, wodurch das Aluminiumoxid in Lithiumaluminat und das Zirkonoxid in Lithiumzirkonat umgewandelt wird.

Wie aus der Zeitschrift "Fuel Cell", Dezember 1990, Seiten 1 bis 6 hervorgeht, muß dabei unter Ausschluß von Feuchtigkeit gearbeitet werden. Wasser führt nämlich zu einer Hydrolyse des gamma-Lithiumaluminats in Lithiumhydroxid und Aluminiumhydroxid. Zwar wird daraus beim Trocknen wieder Lithiumaluminat gebildet, jedoch nicht die gamma-Phase oder -Kristallmodifikation, sondern die alpha- oder beta-Phase. Im Gegensatz zur gamma-Phase, die bei der Betriebstemperatur der Brennstoffzelle stabil ist, geht die alpha- bzw. beta-Phase während des Betriebs der Brennstoffzelle jedoch in die gamma-Phase über, was mit einer Volumenänderung der Matrix einhergeht und zur Funktionsbeeinträchtigung der Brennstoffzelle führen kann, beispielsweise durch Setzungsrisse in der Elektrolytführenden Matrix sowie Verspannungen und Verzug des Zellenstapels.

Die Verwendung organischer Lösungsmittel zur Schlickerbildung ist mit einer Reihe von Nachteilen behaftet. So erfordert das Arbeiten mit Lösungsmitteln entsprechende Schutzvorkehrungen zur Vermeidung gesundheitlicher Risikien und zum Explosionsschutz. Auch muß der Schlicker sofort zu Folien gezogen werden. Wenn der Schlickeransatz stehengelassen wird, bildet sich nämlich oft schon nach wenigen Sekunden eine Haut, da das organische Lösungsmittel an der Oberfläche des Schlikkeransatzes verdunstet. Nach Bildung einer solchen Haut ist der Ansatz jedoch nicht mehr verwendbar, da sich beim Ziehen der Folie durch Hautteile riefenartig Ziehspuren bilden würden.

Um Gaseinschlüsse in dem Schlicker zu beseitigen, die zu unerwünscht großen Poren in der Matrix führen würden, wird nach dem bekannten Verfahren der Schlicker nach dem Ziehen, also als Naßfilm, entgast. Da dies sehr langsam erfolgen muß, kann nach dem Stand der Technik nur eine geringe Ziehgeschwindigkeit verwirklicht werden.

Dem Patentbegehren liegt die Aufgabe zugrunde, das bekannte Verfahren zur Herstellung einer gamma-Lithiumaluminat-Matrix für eine Schmelcarbonat-Brennstoffzelle so zu vereinfachen, daß trotz der Neigung des gamma-Lithiumaluminats zur Hydrolyse nicht mehr - wie bisher - unter striktem Feuchtigkeitsausschluß gearbeitet werden muß.

Dies wird erfindungsgemäß mit dem in Anspruch 1 gekennzeichneten Verfahren erreicht. In den Unteransprüchen sind vorteilhafte Ausgestaltungen der Erfindung wiedergegeben.

Erfindungsgemäß wird also als flüssige Phase des Schlickers eine wäßrige Polyvinylalkohol-Lösung verwendet. Überraschenderweise wird dadurch keine Hydrolyse der gamma-Lithiumaluminatteilchen in dem Schlicker hervorgerufen, so daß kein Lithiumaluminat der alpha- oder beta-Kristallmodifikation auftritt, das beim Betrieb der Brennstoffzelle in gamma-Lithiumaluminat unter Volumenänderung übergeht.

Der Erfindung liegt dabei der Gedanke zugrunde, die Wassermoleküle des Schlickers zumindest so weit zu binden, daß sie für eine Hydrolyse der gamma-Lithiumaluminatteilchen nicht mehr zur Verfügung stehen. Polyvinylalkohol weist durch seine Hydroxylgruppen diese Fähigkeit auf. Er ist in der Lage, Wassermoleküle in großer Menge ausreichend fest zu binden.

Damit kann der Schlicker nach dem erfindungsgemäßen Verfahren ohne organische Lösungsmittel hergestellt werden. Das erfindungsgemäße Verfahren zeichnet sich damit auch durch eine hohe Umweltverträglichkeit aus. So kann eine wäßrige Polyvinylalkohol-Lösung problemlos an eine kommunale Kläranlage abgegeben werden. Es ist damit keine teure Sondermüllentsorgung notwendig.

Der erfindungsgemäß hergestellte Schlicker besitzt darüber hinaus eine Topfzeit von mehreren Stunden. Das heißt, eine Hautbildung tritt auch nach mehreren Stunden nicht auf. Damit muß das Folienziehen oder sonstige Folienherstellungsverfahren nicht sofort nach der Herstellung des Schlikkers durchgeführt werden, was die Handhabung wesentlich erleichtert.

Ein wesentlicher Vorteil des erfindungsgemäßen Verfahrens besteht ferner darin, daß der Schlicker - da er nicht zur Hautbildung neigt - entgast werden kann, bevor daraus die Folie gebildet wird. Das heißt, nach dem erfindungsgemäßen Verfahren kann der Schlicker-Ansatz beispielsweise durch Anlegen eines Vakuums entgast oder einer Fallfilm-Entgasung unterworfen werden. Das Entgasen kann damit verhältnismäßig schnell durchgeführt werden. Da nach dem erfindungsgemäßen Verfahren der Schlicker bereits entgast ist, wenn die Folie hergestellt wird, kann außerdem eine hohe Folienherstellungsgeschwindigkeit wie eine Folienziehgeschwindigkeit von beispielsweise 2 bis 10 m/min angewendet werden.

Die Naßfolie wird nach ihrer Herstellung an der Luft getrocknet. Sie kann dann, mit den beiden Elektrodenschichten versehen, in die Brennstoffzelle eingebaut werden. Wenn sie nicht nach einigen Tagen eingebaut wird, ist es zweckmäßig, sie nach dem Trocknen in einem Trockenschrank zu lagern.

Das erfindungsgemäße Verfahren zeichnet sich also durch eine hohe Umweltverträglichkeit und eine einfache Verarbeitbarkeit des Schlickers aus.

Die Herstellung der Haßfolie kann nach dem erfindungsgemäßen Verfahren mit einem Folienziehgerät erfolgen. Die Naßfolie kann jedoch auch auf andere Weise hergestellt werden, beispielsweise mit einem Druckverfahren, wie Siebdruck, durch Kalandrieren oder Gießen.

Insbesondere wenn eine Acrylglasplatte als Unterlage verwendet wird, kann die Folie nach dem Trocknen an der Luft von der Unterlage problemlos abgenommen werden. Darin ist ein weiterer Vorteil gegenüber dem bekannten Verfahren mit einem Schlicker mit einem organischen Lösungsmittel zu sehen, bei dem zwischen der Naßfolie und der Unterlage eine Trennfolie vorgesehen werden muß.

Dem Schlicker kann ferner ein Rißstopper zugesetzt werden. Als Rißstopper kann z.B. Aluminiumoxid (Korund) mit einer mittleren Teilchengröße von 3 bis 30 um verwendet werden. Der Anteil der Aluminiumoxid-Teilchen, bezogen auf das Gesamtgewicht von gamma-Lithiumaluminat und Aluminiumoxid, beträgt vorzugsweise weniger als 20 %.

Der Anteil des Polyvinylalkohols in der flüssigen, also wäßrigen Phase des Schlickers beträgt im allgemeinen 3 bis 20 Gew.%, bezogen auf die flüssige Phase, vorzugsweise 5 bis 12 Gew.%.

Als Polyvinylalkohol wird vorzugsweise ein Polyvinylalkohol mit einem mittleren Polymerisationsgrad von etwa 300 bis 6000, vorzugsweise etwa 1000 bis 4000 verwendet, was einem mittleren Molekulargewicht von etwa 20000 bis 300000, vorzugsweise etwa 50000 bis 200000 entspricht.

Der Hydrolysegrad des Polyvinylalkohols kann beispielsweise zwischen 70 und 100 Mol-% schwanken In Form einer 4 gew.-%igen wäßrigen Lösung weist der verwendete Polyvinylalkohol vorzugsweise eine Viskosität von 4 bis 70, insbesondere 10 bis 40 mPas² auf.

Das zur Schlickerbildung verwendete gamma-Lithiumaluminat weist vorzugsweise eine mittlere Teilchengröße von weniger als 3 um insbesondere weniger als 2 um auf. Das Gewichtsverhältnis des gamma-Lithiumaluminats zu der Polyvinylalkoholhaltigen wäßrigen Phase des Schlickers beträgt vorzugsweise 3:1 bis 1:3. Es hängt insbesondere von der Teilchengröße des gamma-Lithiumaluminats ab Das heißt, je feiner das gamma-Lithiumaluminat ist, um so mehr Flüssigkeit ist zur Schlickerbildung notwendig. Vorzugsweise weist der Schlikker einen Viskositätsbereich von etwa 1,5 bis 10 cP auf.

Das nachstehende Beispiel dient der weiteren Erläuterung der Erfindung.

### Beispiel

90 Gewichtsteile gamma-Lithiumaluminat mit einer mittleren Teilchengröße von 1 um und 10 Gewichtsteile Aluminiumoxid mit einer mittleren Teilchengröße von 5 um werden mit 100 Gewichtsteilen einer 10%igen wäßrigen Polyvinylalkohol-Lösung versetzt. Als Polyvinylalkohol wird Mowiol@ 26-88 verwendet. Das Gemisch wird bis zur Bildung eines homo- genen Schlickers gerührt. Der Schlicker wird dann in einem Vakuum von 8 mbar in wenigen Minuten vollständig entgast, worauf er in ein Folien- ziehgerät gegeben wird, um eine Folie mit einer Naßschichtdicke von etwa 1 mm zu bilden. Die Folienziehgeschwindigkeit beträgt etwa 5 m/min. Als Unterlage wird eine Acrylharzplatte verwendet. Die nasse Folie wird nach dem Trocknen an der Luft von der Acrylharzplatte genommen.

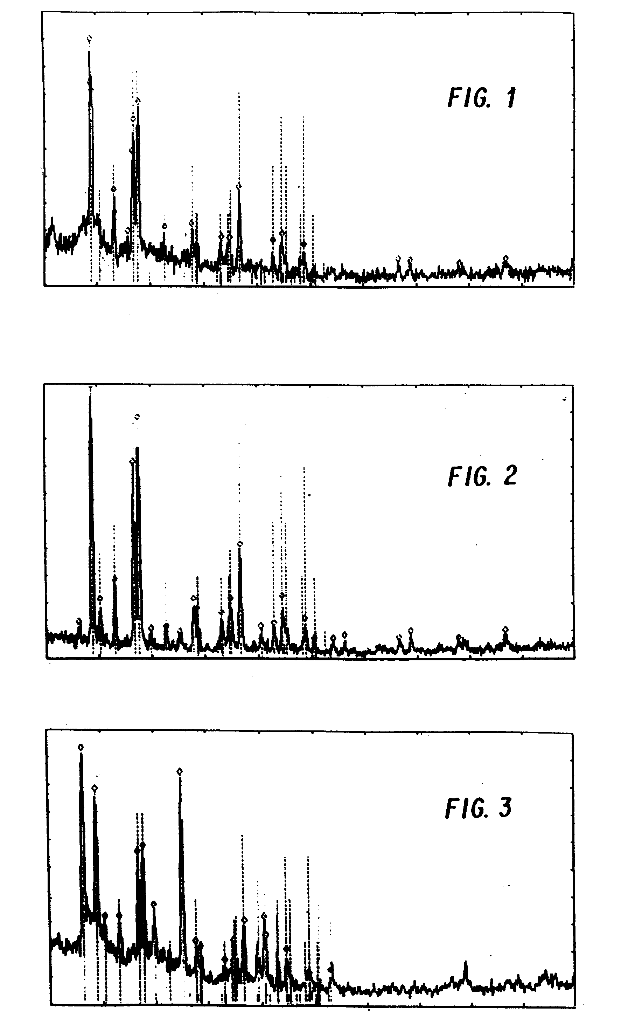

Mit einer Probe der Folie, die einem Brennvorgang unterworfen worden ist, wird eine Röntgenstrukturanalyse durchgeführt. Das Röntgenstruktur-Spektrumder Probe vor dem Brennen ist in Fig. 1 und nach dem Brennen in Fig. 2 der beigefügten Zeichnung dargestellt. Nach ASTM-Kartei 18-0714 handelt es sich dabei um gamma-Lithiumaluminat. Im Vergleich dazu ist in Fig. 3 der Zeichnung das Röntgenstruktur-Spektrum eines Gemisches aus gamma- und alpha-Lithiumaluminat dargestellt, wobei das alpha-Lithiumaluminat nach der ASTM-Kartei 19-0713 bestimmt wird. Dieses Gemisch ist dem gleichen Brennvorgang unterworfen worden. Es ist ersichtlich, daß die für alpha-Lithiumaluminat typischen Peaks bei der erfindungsgemäß hergestellten Folienprobe nicht auftreten.

## Patentansprüche

1. Verfahren zur Herstellung einer Lithiumaluminat-Matrixschicht für eine Schmelzcarbonat-Brennstoffzelle, bei dem aus einem Schlicker aus gamma-Lithiumaluminat-Teilchen eine Naßfolie gebildet wird, die nach dem Trocknen die Lithiumaluminat-Matrixschicht bildet, dadurch gekennzeichnet, daß die flüssige Phase des Schlickers durch eine wäßrige Polyvinylalkohol-Lösung gebildet wird.

2. Verfahren nach Anspruch 1, dadurch gekennzeichnet, daß in der flüssigen Phase eine Polyvinylalkohol-Konzentration von 3 bis 20 Gew.-% eingestellt wird.

3. Verfahren nach Anspruch 1 oder 2, dadurch gekennzeichnet, daß Polyvinylalkohol als 4- gew.%ige Lösung mit einer Viskosität von 4 bis 70 mPa. eingesetzt wird.

4. Verfahren nach einem der vorstehenden Ansprüche, dadurch gekennzeichnet, daß Polyvinylalkohol mit einem Hydrolysegrad von mehr als 70 Mol-% und einem mittleren Polymerisationsgrad von 300 bis 6000 eingesetzt wird.

5. Verfahren nach einem der vorstehenden Ansprüche, dadurch gekennzeichnet, daß das Gewichtsverhältnis des gamma-Lithiumaluminats zu der flüssigen Phase in dem Schlicker auf 3:1 bis 1:3 eingestellt wird.

6. Verfahren nach einem der vorstehenden Ansprüche, dadurch gekennzeichnet, daß gamma-Lithiumaluminat mit einer mittleren Teilchengröße von weniger als 3 um eingesetzt wird.

7. Verfahren nach einem der vorstehenden Ansprüche, dadurch gekennzeichnet, daß dem Schlicker ein Rißstopper zugesetzt wird.

8. Verfahren nach Anspruch 7, dadurch gekennzeichnet, daß als Rißstopper Aluminiumoxid (Korund) mit einer mittleren Teilchengröße von weniger als 30 um verwendet wird.

9. Verfahren nach einem der vorstehenden Ansprüche, dadurch gekennzeichnet, daß der Schlicker vor der Bildung der Naßfolie entgast wird.

10. Verfahren nach Anspruch 9, dadurch gekennzeichnet, daß der Schlicker im Vakuum entgast und/oder einer Fallfilm-Entgasung unterzogen wird.
